(19) Europäisches Patentamt
European Patent Office
Office européen des brevets

(11) EP 3 700 941 B1

(12) **EUROPEAN PATENT SPECIFICATION**

(45) Date of publication and mention of the grant of the patent:
**01.03.2023 Bulletin 2023/09**

(21) Application number: **18796868.0**

(22) Date of filing: **25.10.2018**

(51) International Patent Classification (IPC):
***C08B 37/14*** *(2006.01)* ***C08L 5/00*** *(2006.01)*

(52) Cooperative Patent Classification (CPC):
**C08B 37/0057; C08L 5/00**

(86) International application number:
**PCT/EP2018/079346**

(87) International publication number:
**WO 2019/081677 (02.05.2019 Gazette 2019/18)**

(54) **A PROCESS FOR PREPARING MODIFIED HEMICELLULOSE**

VERFAHREN ZUR HERSTELLUNG VON MODIFIZIERTER HEMICELLULOSE

PROCÉDÉ POUR LA PRÉPARATION D'HÉMICELLULOSE MODIFIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2017 SE 1751335**
**24.05.2018 SE 1850626**

(43) Date of publication of application:
**02.09.2020 Bulletin 2020/36**

(73) Proprietor: **Lantmännen ek för**
**104 25 Stockholm (SE)**

(72) Inventors:
- **BÖRJESSON, Mikaela**
**413 21 Göteborg (SE)**
- **LARSSON, Anette**
**424 70 Olofstorp (SE)**
- **WESTMAN, Gunnar**
**438 92 Härryda (SE)**
- **STRÖM, Anna**
**433 52 Öjersjö (SE)**

(74) Representative: **Valea AB**
**Box 1098**
**405 23 Göteborg (SE)**

(56) References cited:
**WO-A1-2014/062129 WO-A1-2014/080086**
**US-A1- 2001 020 091**

- **AMAN P ET AL: "Periodate oxidation and degradation studies on the major water-soluble arabinoxylan in rye grain", CARBOHYDRATE POLYMERS, APPLIED SCIENCE PUBLISHERS, LTD. BARKING, GB, vol. 15, no. 4, 1 January 1991 (1991-01-01), pages 405-414, XP024147280, ISSN: 0144-8617, DOI: 10.1016/0144-8617(91)90090-Y [retrieved on 1991-01-01]**
- **Hassan Amer ET AL: "Synthesis and Characterization of Periodate-Oxidized Polysaccharides: Dialdehyde Xylan (DAX)", Biomacromolecules, vol. 17, no. 9, 16 August 2016 (2016-08-16), pages 2972-2980, XP055550603, US ISSN: 1525-7797, DOI: 10.1021/acs.biomac.6b00777**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

TECHNICAL FIELD

The present disclosure concerns a process for preparing modified hemicellulose as well as modified hemicellulose obtainable by such a process and articles such as a film comprising said modified hemicellulose. More specifically, the present disclosure concerns a process for preparing a film comprising modified hemicellulose and films obtainable by such a process.

BACKGROUND

Hemicelluloses are a group of polysaccharides found in wood and cereal crops. Hemicelluloses are the second most abundant polymer in nature, only cellulose being more abundant. Compared to cellulose, the properties of hemicellulose are less beneficial and hemicelluloses are therefore often considered as waste or by-products of low value in manufacturing processes. As a consequence, large amounts of hemicelluloses are burnt to provide energy, disposed of, used in animal feed etc.

Hemicelluloses include xylan, glucuronoxylan, arabinoxylan, glucomannan and xyloglucan.

In wood, the two main hemicelluloses are xylan and glucomannan. In hardwood xylan is the major hemicellulose while softwood contains a mixture of xylan and glucomannan.

Scheme 1 depicts an exemplary chemical structure of xylan, which has a backbone of xylose monomer units. It will be appreciated that the chemical structure of xylan may vary depending on e.g. its origin. For instance, some xylose monomers may be substituted with glucose residues and/or it may contain glucuronic acid.

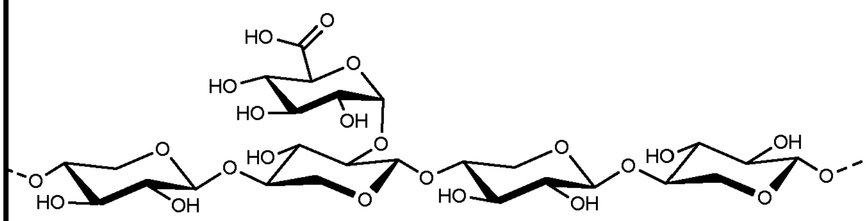

Scheme 1

Scheme 2 depicts an exemplary chemical structure of galactomannan, which has a backbone of mannose and glucose with galactose side-groups. It will be appreciated that the chemical structure of galactomannan may vary depending on e.g. its origin.

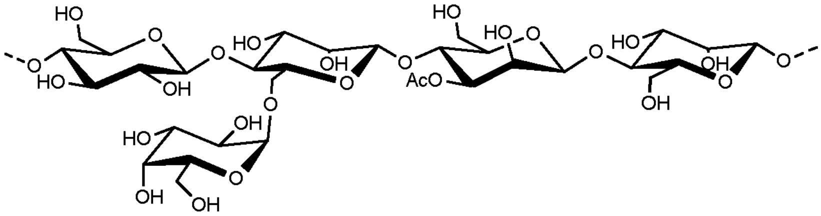

Scheme 2

Arabinoxylan is the most abundant hemicellulose in the grain (as non-starch polysaccharides) and the straw (associated with cellulose fibres and lignin) of cereal crops.

Scheme 3 shows an exemplary chemical structure of arabinoxylan, which has a backbone of 1 ,4-linked xylose units some of which are substituted with arabinose residues. It will be appreciated that the chemical structure of the arabinoxylan may vary depending e.g. on its origin. For instance, the ratio of arabinose: xylose may vary and/or the arabinoxylan may contain ferulic acid.

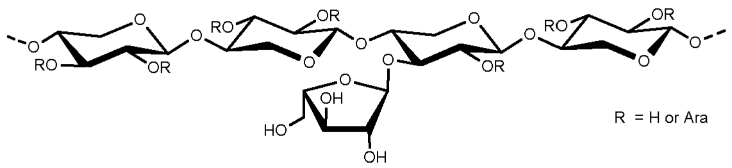

R = H or Ara

Scheme 3

It has been found that the process for producing the hemicellulose may impart attractive properties to the resulting hemicellulose(s) and products thereof. Consequently, it has been realized that hemicellulose containing materials such as agricultural by-product constitute a valuable source of renewable materials.

WO 2016/198651 discloses a process for producing hemicellulose fractions from cereal crops, comprising hot water extraction of hemicellulose fractions from cereal crops in combination with enzymatic treatments and/or subsequent membrane ultrafiltration to further purify the extracts. The arabinoxylans isolated from the process are predominantly feruloyated, and may be used for the preparation of carbohydrate-based materials with functional properties selected from the group consisting of films, hydrogels, active food packaging, prebiotics, bioactive compounds and texturizing agents. A comparison is made with a process for preparing arabinoxylan (AX), said process involving alkaline extraction at high pH, which is stated to cause cleavage of phenolic acid functionalities from the AX fractions.

Biomacromolecules, 2016, 17, 2972-2980 discloses the synthesis and characterization of periodate-oxidized polysaccharides, and the formation of dialdehyde xylan is reported. It is stated that the oxidized xylan demonstrated lower thermal stability upon TGA analysis and a greater amount of char compared to the unmodified xylan.

To increase the versatility and/or availability of hemicelluloses, and/or enable industrial production thereof, there remains a need for alternative processes in this field.

It is an object of the present disclosure to provide a process fulfilling said need. Further, it is an object of the present disclosure to overcome or at least mitigate some of the problems associated with processes for preparing hemicellulose(s) such as modified hemicelluloses and/or the resulting hemicelluloses thereof. It is also an object of the present disclosure to provide a hemicellulose film obtained by such a process.

## SUMMARY

There is provided a process for producing modified hemicellulose. The process comprises the steps of:

a) providing a mixture of at least one solvent and a hemicellulose, wherein said hemicellulose is arabinoxylan,
b) subjecting the mixture of step a) to an oxidizing agent selected from the group consisting of periodate, lead tetraacetate, ozone, dichromate, permanganate, thallium(III) salts, pyridinium chlorochromate and any combination thereof to provide an oxidized mixture,
c) adding a reducing agent selected from the group consisting of aluminium hydride, borohydride, dithionite, polysulfide, anthraquinone and any combination thereof to said oxidized mixture, and
d) treating the mixture of step c) with a reagent selected from the group consisting of epoxide, alkyl halide, alkyl tosylate, alkyl mesylate and any combination thereof, optionally in the presence of a base or a coupling reagent, thereby providing modified hemicellulose.

Further, there is provided modified hemicellulose obtainable by the process described herein.

There is also provided an article such as a film comprising modified hemicellulose obtainable by the process described herein.

## BRIEF DESCRIPTION OF THE DRAWINGS

Figure 1 shows an FTIR spectrum of arabinoxylan from wheat before and after treatment with the process described herein.

Figure 2 shows the amount of modified carbohydrates for arabinoxylan from wheat before and after treatment as described herein.

Figure 3 shows the amount of arabinose and xylose for arabinoxylan from wheat before and after treatment as described herein.

Figure 4 shows the amount of modified carbohydrates for arabinoxylan from barley before and after treatment as described herein.

Figure 5 shows the amount of arabinose and xylose for arabinoxylan from barley before and after treatment as described herein.

## DETAILED DESCRIPTION

In accordance with the present disclosure there is provided a process for producing modified hemicellulose. The process comprises the steps of:

a) providing a mixture of at least one solvent and a hemicellulose, wherein said hemicellulose is arabinoxylan,
b) subjecting the mixture of step a) to an oxidizing agent selected from the group consisting of periodate, lead tetraacetate, ozone, dichromate, permanganate, thallium(III) salts, pyridinium chlorochromate and any combination thereof to provide an oxidized mixture,
c) adding a reducing agent selected from the group consisting of aluminium hydride, borohydride, dithionite, polysulfide, anthraquinone and any combination thereof to said oxidized mixture, and
d) treating the mixture of step c) with a reagent selected from the group consisting of epoxide, alkyl halide, alkyl tosylate, alkyl mesylate and any combination thereof, optionally in the presence of a base or a coupling reagent, thereby providing modified hemicellulose.

Surprisingly, it has been found that the modified hemicellulose produced in accordance with the process described herein may be converted into articles such as films having attractive properties such as water-resistance, water-insolubility, transparency and/or elasticity.

The hemicellulose used in the process described herein may be obtained from agricultural side streams and/or agricultural product streams. This is a significant benefit since such agricultural side streams and/or product streams is/are frequently easily available in large amounts at low cost. Instead of burning or disposing of the agricultural side streams and/or product streams, the process of the present disclosure provides for use of agricultural side streams and/or product streams in high value applications. Accordingly, the process of the present disclosure allows for valorization of agricultural side streams and/or product streams from both an economic and an environmental point of view. Examples of agricultural side streams and/or product streams include an agricultural by-product such as a cereal by-product. Examples of cereal by-products from which the hemicelluloses of the present disclosure may be derived include cereal bran such as wheat bran, barley bran, rye bran, or oat bran, or cereal husk such as wheat husk, barley husk, rye husk, or oat husk.

Thus, the fact that the modified hemicellulose may be produced from agricultural side-streams and product streams as described herein that may otherwise have been disposed of or burnt makes the process as well as products resulting from said process sustainable and also valuable from an economic point of view. Moreover, the modified hemicellulose described herein is believed to be at least partially biodegradable thereby further lowering the overall environmental impact.

In particular, films comprising the modified hemicellulose as described herein may be used in a large number of important applications such as packaging, materials, membranes, food, pharmaceuticals and additives. For instance, the films comprising the modified hemicellulose as described herein may be used as a plastic wrap, cling film, cling wrap or the like for sealing items such as food in containers. The films may be provided as a roll in a box with a cutting edge. When used for sealing, the film may allow for a tight closure over the container without a need for an adhesive.

In comparison, plastic wraps currently on the market are frequently based on fossil fuel based materials such

as polyvinylchloride, polyethylene and polyvinylidene chloride which are not biodegradable. Instead, articles such as films comprising the modified hemicellulose as described herein constitute an eco-friendly and sustainable alternative.

The hemicellulose of the process described herein may comprise or consist of arabinoxylan. The arabinose content of the arabinoxylan may vary depending on e.g. the origin of the arabinoxylan and/or the preparation process of said arabinoxylan. The arabinoxylan may have an arabinose:xylose ratio within the range of from 0.1:1 to 2:1 or from 2:1 to 1:5. For instance, the arabinose:xylose ratio may be 0.3:1, 1:1 or 1:3.4. Moreover, the arabinoxylan may be feruloylated, i.e. it may contain ferulic acid. The ferulic acid may be covalently bonded to the arabinoxylan. It will be appreciated that the arabinoxylan of the process described herein may be feruloylated to varying degrees. For instance, it may be substantially feruloylated or may substantially lack ferulic acid. The origin of the arabinoxylan may have an impact on the amount of ferulic acid present in the arabinoxylan, as it has been reported in WO 2016/198651 that an alkaline extraction process decreases the amount of feruloylated arabinoxylan while hot water extraction of hemicellulose fractions from cereal crops provides feruloylated arabinoxylan.

The arabinoxylan may be provided from at least one cereal and/or wood. The cereal may be or comprise cereal bran and/or cereal husk. Examples of cereal bran include wheat bran, barley bran, rye bran, or oat bran. In an example, the cereal bran may be wheat bran. Examples of cereal husk include wheat husk, barley husk, rye husk, or oat husk. In an example, the cereal husk may be barley husk.

It will be appreciated that the process described herein may be performed with any oxidizing agent suitable for cleavage of vicinal diols into corresponding aldehyde groups and/or any reducing agent suitable for reducing an aldehyde into the corresponding alcohol and/or any epoxide or alkylating agent suitable for reaction with an alcohol such as a primary alcohol. Examples of suitable oxidizing agents suitable for cleavage of vicinal diols into corresponding aldehyde groups include periodate, lead tetraacetate, ozone, dichromate, permanganate, thallium(III) salts, pyridinium chlorochromate and any combination thereof. The periodate may be periodic acid or sodium periodate. Examples of suitable reducing agent suitable for reducing an aldehyde into the corresponding alcohol include aluminium hydride, borohydride, dithionite, polysulfide, anthraquinone and any combination thereof. In an example the reducing agent is borohydride such as sodium borohydride. Examples of suitable epoxides include alkyl glycidyl ethers such as butyl glycidyl ether. Suitable alkyl halides, alkyl tosylates and alkyl mesylates may include straight or branched alkyl chains optionally provided with aryl substituents. The oxidizing agent may be periodate such as sodium periodate, and/or the reducing agent may be borohydride such as sodium borohydride or dithionite such as sodium dithionite, and/or the epoxide may be butyl glycidyl ether. It has been found that the aldehyde groups formed in the oxidation step of the process of the present disclosure lower the thermal stability of the hemicellulose, while reduction of the aldehyde groups into corresponding alcohol groups increased the thermal stability of the resulting hemicellulose as compared to the hemicellulose containing aldehyde groups. Table 2 of the Examples section of this documents provides evidence for this lowering and increase of thermal stability as measured by $T_o$ (i.e. onset temperature) using TGA (i.e. thermogravimetric analysis) measurement.

The solvent(s) used in the steps of the process described herein may be any suitable solvent(s) known to the person skilled in the art. For instance, the solvent(s) may include water and/or an alcohol.

Further, it will be appreciated that the hemicellulose subjected to oxidation and reduction of the process described herein may be reacted with any suitable alkyl halide or epoxide optionally in the presence of a base and/or coupling agent. Examples of suitable alkylating agents include alkyl halide, alkyl tosylate and alkyl mesylate as described herein. The base may be a hydroxide such as sodium hydroxide or a hydride such as sodium hydride. The coupling agent may be N, N'-dicyclohexylcarbodiimide.

The choice and amount of alkylating agent or epoxide may be selected to provide for desired properties. For instance, between 3 and 5 mole equivalents of the epoxide or alkylating agent based on the amount of hemicellulose prior to oxidation and reduction may be used leading to a molar substitution degree of from about 1 to about 5 such as from 2 to 4.

Surprisingly, it has been found that the combination of subjecting the hemicellulose arabinoxylan to oxidation and reduction as described herein with reaction with an epoxide, alkylating agent or the like provides modified hemicelluloses with properties such as a low glass transition temperature and low or substantially no water-solubility. These properties make them suitable for thermal treatment and/or for use in applications where water-resistance is desired.

The hemicellulose of the process described herein may be obtained from any suitable production process thereof. For instance, the hemicellulose may be obtained from an alkaline extraction process, and/or a process comprising pressurized hot water extraction and enzymatic treatment.

Advantageously, an alkaline extraction process suitable for producing arabinoxylan that may subsequently be used in the process described herein includes an alkaline extraction step which may be performed at room temperature. For instance, the alkaline extraction process may include the steps of:

(i) treating an aqueous solution of an agricultural side-stream or product stream with HCl (i.e. hydrochloric acid),
(ii) removing the aqueous phase from (i) thereby providing a residue,
(iii) delignifying the residue of step (ii) by treatment with aqueous chlorite such as sodium chlorite,

(iv) removing the aqueous phase of step (iii) to provide a residue,
(v) treating the residue of step (iv) at room temperature with aqueous hydroxide such as sodium hydroxide and a reducing agent such as thionite, preferably sodium dithionite,
(vi) adding an acid such as HCl thereby precipitating cellulose and providing arabinoxylan in an aqueous solution,
(vii) isolating the hemicellulose from the aqueous solution of step (vi),
(viii) optionally further treating the isolated hemicellulose from step (vii) such as subjecting the isolated hemicellulose to enzymatic treatment. The enzymatic treatment may involve treatment with amylase.

Additionally or alternatively, the hemicellulose of the process described herein may be obtained from a process comprising pressurized hot water extraction and enzymatic treatment. Such a process is described in WO 2016/198651 and is incorporated by reference herein. Thus, there is provided a process for producing a hemicellulose fraction from a cereal crop, comprising subjecting said cereal crop to

a) pressurized hot water extraction and a subsequent
b) enzymatic treatment of the insoluble residues.

The pressurized hot water of step a) may be performed at a temperature of between 140-160°C and/or at pH between pH 5-9. For instance, step a) may be performed at 160°C at pH 7. Instead of or in addition to step b) the process may comprise one or more further steps of subsequent membrane ultrafiltration to further purify the extracts.

There is also provided modified hemicellulose obtainable by the process described herein.

Advantageously, the modified hemicellulose obtainable by the process described herein may be converted into an article optionally in combination with one or more additives. Accordingly, there is provided an article comprising modified hemicellulose obtainable by the process described herein. The article may be selected from the group consisting of a film, material, membrane, food ingredient, pharmaceutical excipient and additive. In an example, the article is a film. The material may form part of a composite material and/or provide for a barrier against moisture. The composite material may be provided as a film. The articles produced in accordance with the process described herein may be used as a replacement for and/or in combination with fossil fuel based materials thereby reducing a negative environmental impact and/or allowing for a transition towards use of renewable raw material in the form of modified hemicelluloses as described herein.

Thus, the process described herein may comprise a further step of:
e) forming a film comprising said modified hemicellulose.

Thus, the process described herein may be a process for producing a film comprising or consisting of a modified hemicellulose as described herein.

The step of forming the film may comprise subjecting the modified hemicellulose described herein to solution casting, hot pressing, film blowing and/or extrusion blowing.

The solution casting may be performed as described herein. For instance, the solution casting may take place by subjecting a sample placed in a solvent such as water, ethanol or a mixture of water and ethanol in a vessel followed by drying until a film is formed. The drying may take place at a temperature from about 20°C to about 30°C.

The hot pressing may be performed as described herein. For instance, the hot pressing may take place by subjecting a sample between plates to a temperature from about 50°C to about 200°C and/or a pressure of from about 1 ton to about 10 tons. For instance, the temperature may be about 140°C or about 150°C and the pressure may be about 5 tonnes.

Advantageously, the step of forming a film includes thermal treatment such as hot pressing allowing for convenient manufacturing on an industrial scale.

Surprisingly, it has been found that articles such as films comprising or consisting of a modified hemicellulose obtainable from the process described herein exhibit advantageous properties including at least one of: water resistance, water-insolubility and/or elasticity. Further, the articles may be meltable when subjected to hot pressing as described herein.

Thus, there is provided an article as described herein exhibiting at least one of the following properties:

water-insoluble,
an elongation within the range of from about 12% to about 300% such as from about 30% to about 220%,
a melt viscosity within the range of from about 50 Pa·s to about 70.000 Pa·s such as from about 100 Pa·s to about 7000 Pa s.

Additionally or alternatively, there is provided an article as described herein exhibiting at least one of the following properties:

water-insoluble,
a tensile stress within the range of from about 0.5 MPa to about 30 MPa such as from about 0.5 MPa to about 20 MPa,
an elongation within the range of from about 12% to about 300% such as from about 30% to about 220%,
a Young modulus within the range from about 1 MPa to about 400 MPa such as from about 1 MPa to about 10 MPa,
a melt viscosity within the range of from about 50 Pa·s to about 70.000 Pa·s such as from about 100 Pa·s to about 7000 Pa s.

In this document, an article is understood to be water-insoluble if ocular inspection shows that said article is not or substantially not dissolved in water when immersed in a water bath for up to 24 hours, said water bath having a temperature of about 60°C.

Further, the melt viscosity described herein may be measured as described in the Examples section of this document.

Moreover, in this document an article such as a film is considered to be stretchable when exhibiting an elongation within the range of from about 12% to about 300% such as from about 30% to about 220%. The elongation may be measured as described in the Examples section of this document. The stretchability is advantageous in several applications such as in sealing applications.

Therefore, articles such as films comprising or consisting of a modified hemicellulose obtainable from the process described herein may be used in applications where properties such as water resistance, water-insolubility and/or elasticity are desirable. Examples of such applications include packaging material, composite material, membrane, food ingredient, pharmaceutical excipient and/or additive.

Thus, there is provided use of an article such as a film comprising or consisting of a modified hemicellulose obtainable from the process described herein as packaging material, composite material, membrane, food ingredient, pharmaceutical excipient and/or additive.

**References**

1. WO 2016/198651
2. Biomacromolecules, 2016, 17, 2972-2980
3. Wood research: bulletin of the Wood research Institute, Kyoto University, (1986), 73: 44-49.
4. Thesis "Chemical modification of polysaccharides - Fundamental research with an applied perspective" by Mikaela Börjesson, Chalmers University of Technology, 2016, ISBN: 978-91-7597-456-9
5. BioResources, (2018), 13(3), 6201-6220.

The disclosure is further illustrated by the following non-limitative Examples.

EXAMPLES

**Abbreviations**

| | |
|---|---|
| AX | Arabinoxylan |
| AX wheat | Arabinoxylan from wheat bran |
| AX barley | Arabinoxylan from barley husk |
| AXU | Anhydroxylos unit |
| BGE | Butyl glycidyl ether |
| kDa | kiloDalton |
| DO | Degree of Oxidation |
| DMA | Dynamic Mechanical Analysis |
| GC | Gas Chromatography |
| GGM | Galactoglucomannan |
| h | hour(s) |
| L | liter |
| M | molar |
| mM | millimolar |
| mmol | millimole(s) |

| | |
|---|---|
| ml | milliliter |
| MS | Molar substitution |
| $MS_{NMR}$ | Molar substitution degree as measured by NMR |
| n.d. | not determined |
| nm | nanometer |
| NMR | Nuclear Magnetic Resonance |
| FTIR | Fourier Transform Infrared |
| $T_g$ | Glass transition temperature |
| $T_o$ | Onset temperature |
| TGA | Thermal Gravimetric Analysis |
| UV-Vis | Ultraviolet-Visible spectroscopy |
| Pa | Pascal |
| MPa | Mega Pascal |
| s | second(s) |

**General**

All chemicals were purchased from Sigma-Aldrich if nothing else is stated. The chemicals were used without further purification. Dialysis membrane (Spectra/Por 3) with a molecular weight cut-off of 3.5 kDa was purchased from Spectrum Labs. Wheat bran was provided by Lantmännen, Sweden. The barley husks were provided as milled barley husks. The xylan was beech wood xylan from Sigma-Aldrich. The GGM was spruce GGM.

$^1$H NMR spectra were recorded on a Varian MR-400 MHz spectrometer at 25°C and calibrated by using the residual peak of the solvent as the internal standard ($D_2O$: $\delta_H$ = 4.79 ppm). Prior to analysis the samples were hydrolyzed with a 72% sulfuric acid as described below. After hydrolysis the liquid solution was neutralized with barium hydroxide and then filtered through glass filters before water was removed through a rotary evaporator.

Hydrolysis: A hydrolysis was performed by adding 3 ml 72% sulfuric acid to 200 mg oven dried sample. The samples were first placed under vacuum for 15 minutes followed by heating in a water bath at 30°C for 60 minutes. Thereafter, 84 g deionized water was added to the samples and an aluminum foil lid was placed over the samples before put in an autoclave for about 1 h at 125°C and thereafter cooled down to room temperature. The solid particles are removed from the liquid by filtration through a 0.45 μm filter. The liquid is collected and used in further analysis.

FTIR spectra were recorded on a Perkin Elmer Frontier FT-IR Spectrometer equipped with an attenuated total reflection (ATR) device. FTIR was analyzed between 4000-400 $cm^{-1}$ and 16 scans collected.

Carbohydrate analysis: A high performance anion exchange chromatography with pulsed amperometric detection (HPAEC-PAD), using an ion chromatography system ICS 3000 (Dionex) equipped with a CarboPac PA1 (4 × 250 mm) analytical column, a gradient pump, isocratic post column pump, column oven and autosampler was used to analyse the carbohydrate composition. The different sugars detected with the available system were arabinose (Ara), galactose (Gal), glucose (Glc), xylose (Xyl), and mannose (Man). Prior to analysis the samples were hydrolyzed as described herein and the liquid solution was subsequently diluted to a concentration of 200 mg/L.

A UV-Vis spectrometer (Cary 60 UV-Vis, Agilent Technologies) was used to follow the progress of the oxidation reaction, scanning the wavelength between 800 to 200 nm with a scanning rate of 300 nm/min. The absorbance at 290 nm was analyzed to measure the consumption of sodium periodate, according to Maekawa et al. in Wood research: bulletin of the Wood research Institute, Kyoto University, (1986), 73: 44-49. A linear standard curve of sodium periodate was prepared with concentrations between 0.1-5 mM. Quarts cuvettes were used for the analysis.

Dialysis: Purification of the samples were done by a dialysis process where the sample were placed into dialysis membrane tubes and sealed in both ends. The filled dialysis tubes were then placed in deionized water for at least 2 days. The deionized water was replaced at least three times per day.

TGA instrument TGA/DSC 3+ Star System (Mettler Toledo) was used where approximately 10 mg sample was heated from 25°C to 500°C under $N_2$ atmosphere and with a heating rate of 5 °C /min.

**Arabinoxylan**

The arabinoxylan used in the experiments of this document was isolated from wheat bran or milled barley husks using an alkaline extraction process as described in the thesis "Chemical modification of polysaccharides - Fundamental research with an applied perspective" by Mikaela Börjesson, Chalmers University of Technology, 2016, ISBN: 978-91-7597-456-9 and BioResources, (2018), 13(3), 6201-6220. By way of example, this alkaline extraction process was performed as follows to obtain arabinoxylan from wheat: 0.5 kg wheat bran was pre-hydrolyzed in 0.05 M HCl solution (10 L) at room temperature over night. The wheat bran was filtrated providing a solid residue. The solid residue was delignified by mixing with 2 L aqueous solution of sodium chlorite (75 g) and adjusting the pH to 3.1 (Jenway 3510

pH meter) with NaOH, thereafter heating at 80°C for 3 h. After delignification the sample was filtrated providing a solid residue, which was dispersed into 1 M NaOH-solution (5 L) containing 50 g sodium dithionite as reducing agent. This alkaline extraction was performed over night at room temperature. The mixture was neutralized by addition of HCl leading to precipitation of cellulose while the hemicellulose remained in the aqueous solution. The two polymers were separated through centrifugation (Heraeus Megafuge 40, Thermo Scientific).

The hemicellulose fraction obtained after isolation contained high amounts of glucose (approximately 18% as shown by the carbohydrate composition measured with a HPAEC-PAD system as described herein), which is believed to origin from starch and β-glucan. The starch was removed from the arabinoxylan by addition of α-amylase (Termamyl 120, Sigma-Aldrich) to an AX/water solution (5 g/L), heated at 60°C for 20 h, followed by dialysis against deionized water. The destarched AX sample was analyzed with respect to its carbohydrate composition using carbohydrate analysis as described herein.

**Oxidation of hemicellulose**

The arabinoxylan from wheat or barley, the xylan or the GGM was oxidized by treatment with $NaIO_4$ (sodium periodate obtained from Riedel de Haen AG) leading to cleavage of vicinal diols and formation of aldehyde groups. The concentration of $NaIO_4$ added results in different degree of oxidation. By way of example, the oxidation was performed as follows for the arabinoxylans: 4 g (30 mmol) hemicellulose such as arabinoxylan was dissolved in 165 ml deionized water and 25 ml of a sodium periodate solution containing 15.2 mmol $NaIO_4$ (0.5 mole eq./AXU), 7.6 mmol $NaIO_4$ (0.25 mole eq./AXU) or 3.8 mmol $NaIO_4$ (0.125 mole eq./AXU). Isopropanol (10 ml) was added to all samples as radical scavenger to prevent side reactions and chain scission. The oxidation reaction was performed at room temperature and in dark with magnetically stirring. The reaction was followed by UV-Vis at λ=290 nm, corresponding to the consumption of sodium periodate. A linear standard curve for the consumption of $NaIO_4$ at 290 nm was performed for concentrations between 0.1-5 mM $NaIO_4$. It was observed that not all sodium periodate was consumed. The reaction was considered to be completed when it was observed that the amount of $NaIO_4$ no longer decreased as shown by UV-Vis. After complete oxidation the solutions were used in a following reducing reaction without any purification. The examples with xylan and GGM are not according to the invention.

Table 1 shows the number of mole equivalents (mole eq.) of added $NaIO_4$ for the tested hemicelluloses and the resulting DO. However, for GGM the DO could not be calculated since the GGM solution appeared to interfere with the absorption band from the consumed $NaIO_4$ at 290 nm.

**Table 1**

| Sample | Example No. | Mole eq. of added $NaIO_4$/ carbohydrate unit | DO (%) |
|---|---|---|---|
| AX wheat | 1 | 0.125 | 7 |
| | 2 | 0.25 | 19 |
| | 3 | 0.5 | 44 |
| AX barley | 4 | 0.125 | 3 |
| | 5 | 0.25 | 9 |
| Xylan | 6 | 0.125 | 3 |
| | 7 | 0.25 | 10 |
| GGM | 8 | 0.125 | n.d. |
| | 9 | 0.25 | n.d. |

It was observed that AX wheat gave the highest DO. It was also observed that AX barley and xylan had similar DO values. It is believed that the lower DO values for AX barley as compared to AX wheat may be due to the fact that AX barley is less water-soluble than AX wheat and also contains less amount of arabinose side groups.

**Reduction of oxidized hemicellulose**

The oxidized hemicellulose as described herein was treated with sodium borohydride ($NaBH_4$) as reducing agent in order to convert aldehyde groups into alcohol groups. Generally, 2 g $NaBH_4$ was added to an aqueous suspension of the oxidized hemicellulose (30 mmol) having a concentration of 20 g/L with 0.3 g sodium phosphate added to the solution giving a sodium phosphate concentration of 0.01 M. The reduction was carried out for 4 h at room temperature

and magnetically stirring. The samples were purified through dialysis against deionized water as described herein. Thermogravimetric analysis (TGA) was performed for the purified samples and the oxidized hemicellulose used as starting material for the reduction. Table 2 shows the results of the TGA measurement. In the sample column of Table 2, the DO of the arabinoxylan from wheat is indicated. $T_o$ is the onset temperature, i.e. the temperature where the sample starts to degrade.

**Table 2**

| Sample | Example No. | $T_o$ (°C) oxidized sample | $T_o$ (°C) oxidized and reduced sample |
|---|---|---|---|
| AX wheat 7 % ox. | 1 | 242 | 264 |
| AX wheat 19 % ox. | 2 | 212 | 250 |
| AX wheat 44% ox. | 3 | 191 | 239 |

It was observed that the $T_o$ value increased for all samples tested, which was taken as evidence for reduction of the aldehyde groups into alcohol groups. A comparative example for AX wheat that had not undergone oxidation and reduction was performed, which showed a $T_o$ value of 256°C.

**Etherification**

The hemicellulose subjected to oxidation and reduction as described herein was reacted with butyl glycidyl ether (BGE) to convert the alcohol groups into ether groups. Different degrees of oxidation of the hemicellulose and different amounts of butyl glycidyl ether were evaluated. By way of example, the etherification is described for arabinoxylan (AX) as follows: To a 100 ml 3-necked round bottom flask equipped with a reflux condenser and nitrogen flow inlet, an AX/water solution (10 g/L) containing 4 g AX (30 mmol) was added together with NaOH pellets (3-5 mole eq./AXU) and dissolved during 1 h at 45°C. Butyl glycidyl ether (3-5 mol eq./AXU) was slowly added to the solution through a needle and the reaction was carried out over night at 45°C and magnetically stirred. After reaction the solutions were neutralized with sulfuric acid. During neutralization the hemicellulose precipitated and was isolated through centrifugation and washed with either water or ethanol depending on the solubility character of the resulting hemicellulose.

The etherification of the hemicellulose alcohol groups was observed by FTIR as shown in Figure 1. Figure 1, graph a) shows an FTIR spectrum of non-modified AX wheat. Figure 1, graph b) shows an FTIR spectrum of AX wheat reacted with BGE without prior oxidation and reduction. Figure 1, graph c) shows an FTIR spectrum of AX wheat that had been subjected to oxidation (DO = 7%), reduction and reaction with BGE as described herein. Figure 1, graph d) shows an FTIR spectrum of AX wheat that had been subjected to oxidation (DO = 19%), reduction and reaction with BGE as described herein. It was observed that Figure 1, graph b) has a more pronounced peak at about 2900-2800 $cm^{-1}$ compared to Figure 1, graph a), which is believed to be due to the butyl group from the BGE. Further, the peak at about 1465 $cm^{-1}$ is more pronounced in Figure 1, graphs c) and 1d) compared to Figure 1, graph b), which is believed to be due to higher extent of substitution of the butyl group from the BGE. The presence of the butyl group of the BGE is also evidenced by the peak at about 740 $cm^{-1}$ in Figure 1, graphs c) and 1d). The shape of the peak of the O-H group at about 3400-3200 $cm^{-1}$ in Figure 1, graph a) changes upon reaction with BGE as shown in Figure 1, graphs b), c) and d).

The molar substitution (MS) degree, i.e. the average number of reacted butyl glycidyl ether groups per carbohydrate unit of the arabinoxylan, was calculated from NMR analysis on hydrolyzed materials i.e. the sugar monomers. The proton from the carbon at the C-1 position in the sugar monomers is used to calculate a ratio for the etherification reactions. The sugar monomers appear in to two different structures, alfa and beta. Therefore the signals around 4.5 ppm (beta H-1) and 5.2 ppm (alfa H-1) were used to evaluate the intensity of the $CH_3$ group found in the attached functional group, namely the butyl glycidyl ether. The hydrolysis was performed as described herein.

The molar substitution degree was determined by NMR using formula (1):

$$MS_{NMR} = \frac{\int(3\ methyl\ protons\ of\ ether)}{3\times(\int\alpha H1+\int\beta H1)} \qquad (1)$$

Table 3 shows the molar substitution for arabinoxylan and xylan subjected to oxidation, reduction and reaction with butyl glycidyl ether (BGE) as described herein. The arabinoxylan was derived from wheat bran and barley husk, respectively. For arabinoxylan from wheat bran (AX wheat) 3 and 5 mole equivalents (mole eq.) were tested. For the other samples, only 3 mole eq. were tested.

A DO of 0 (zero) in Table 3 means that the sample was not subjected to oxidation and reduction. Thus, these

samples were subjected to reaction with BGE without prior oxidation and reduction. However, when a DO value different from zero is provided the sample was subjected to oxidation and reduction prior to reaction with BGE.

**Table 3**

| Sample | Example No. | DO | $MS_{NMR}$ for 3 mole eq. of BGE | $MS_{NMR}$ for 5 mole eq. of BGE |
|---|---|---|---|---|
| AX wheat | 1 | 0 | 0.98 | 2.37 |
| | 2 | 7 | 2.03 | 2.91 |
| | 3 | 19 | 2.98 | 3.08 |
| AX barley | 4 | 0 | 2.30 | |
| | 5 | 3 | 3.87 | |
| | 6 | 9 | 3.60 | |
| Xylan | 7 | 0 | 1.17 | |
| | 8 | 10 | 1.49 | |

It was observed that subjecting the samples to oxidation and reduction prior to reaction with BGE resulted in a higher $MS_{NMR}$. This is believed to be due to formation of the more reactive primary alcohols in the reduction reaction.

**Hemicellulose films**

Hemicellulose films were prepared from solution casting and/or through a hot-press technique. The apparent film thickness were determined after storage of the films at 23°C and 50% RH by measuring the thickness at five random locations on each film using a digital caliper.

Solution casting

In the solution casting technique a solution of the sample in water or ethanol was casted in a petri dish and dried in a climate chamber holding 23°C and a relative humidity of 50%. The resulting film had a thickness of approximately 0.1 mm.

The BGE-treated films, i.e. films made from AX wheat or AX barley that had been reacted with BGE without prior oxidation and reduction as described herein, were water-soluble and casted from 20 g/L water solutions.

The oxidized and reduced BGE-treated films, i.e. films made from AX wheat or AX barley that had been subjected to oxidation, reduction and reaction with BGE as described herein, had a much lower solubility in water as compared to the AX films but formed a viscous solution in ethanol or an ethanol water mixture containing at least 65% ethanol. The oxidized and reduced BGE treated AX-films were casted from 20 g/L in ethanol solutions.

Xylan that had been oxidized, reduced and reacted with BGE was casted from 20 g/L water solution.

GGM that had been oxidized, reduced and reacted with BGE was casted from 20 g/L ethanol solution of at least 65% ethanol concentration.

Table 4 shows the solubility of the solution casted films in water and water-ethanol mixture of at least 65% ethanol, respectively. A DO of 0 (zero) in Table 4 means that the sample was not subjected to oxidation and reduction. Thus, these samples were subjected to reaction with BGE without prior oxidation and reduction. However, when a DO value different from zero is provided the sample was subjected to oxidation and reduction prior to reaction with BGE. The testing was made by immersing the film in water or mixture of ethanol and water to a temperature of about 60°C for 24 hours or less followed by ocular inspection to see if the film was dissolved. If the film was dissolved it is noted as "Yes" in Table 4. If the film was not dissolved it is noted as "No" in Table 4. When the films showed partly solubility in both solutions it is noted as "Partly" in Table 4. For GGM, the DO could not be determined by UV-Vis at 290 nm because the GGM solution interfered with the absorption band from the consumed $NaIO_4$. Therefore, for GGM the amount oxidation agent is stated.

**Table 4**

| Sample | Example No. | DO (%) | Solubility in water | Solubility in ethanol >65% |
|---|---|---|---|---|
| Butylated AX wheat (3 mole eq. of BGE) | 1 | 0 | Partly | Partly |
| | 2 | 7 | No | Yes |
| | 3 | 19 | No | Yes |
| Butylated AX barley (3 mole eq. of BGE) | 4 | 0 | n.d. | n.d. |
| | 5 | 3 | No | Yes |
| | 6 | 9 | No | Yes |
| Butylated Xylan (3 mole eq. of BGE) | 7 | 0 | Yes | No |
| | 8 | 3 | n.d. | n.d. |
| | 9 | 10 | Partly | Partly |
| Butylated GGM (3 mole eq. of BGE) | 10 | 0 | No | Yes |
| | 11 | 0.125 mole eq. $NaIO_4$ were added | No | Yes |
| | 12 | 0.25 mole eq. $NaIO_4$ were added | No | Yes |

Example 1 of Table 4 shows that an arabinoxylan sample that had been reacted with BGE without prior oxidation and reduction provided a partly water-soluble film. Examples 2, 3, 5 and 6 of Table 4 show that samples that had undergone oxidation and reduction prior to reaction with BGE provided films that were not water-soluble. Instead, these films were soluble in a mixture of ethanol and water with a concentration of at least 65% ethanol. It was concluded that subjecting arabinoxylan to oxidation, reduction and reaction with a functionalizing group such as BGE allowed for producing a film that was not water-soluble.

A comparison of Example 7 with Example 9 of Table 4 shows that subjecting xylan to oxidation and reduction prior to reaction with BGE did only slightly change the water solubility properties of the film.

Examples 10-12 of Table 4 show that the produced film was non water-soluble but soluble in a mixture of ethanol and water with a concentration of at least 65% ethanol. Thus, for GGM the solubility in ethanol or water does not seem to be affected by letting the sample undergo oxidation and reduction prior to reaction with BGE.

Hot press technique

In the hot press technique, the sample was pressed into 0.5 mm thick films by placing the dried sample in a mold (30 × 30 × 0.5 mm) with thin Teflon film and metal plates on top and below the sample and mold. The sample plates were pressed between two hot plates (140°C) and the temperature was controlled by a EUROTHERM 91e device. The films were pressed for 6 minutes in total where the first 3 minutes was without pressure and the last 3 minutes was with 5 tonnes pressure.

AX wheat, xylan and GGM were subjected to the hot press technique described above. However, it was found that none of them could be pressed into a film using these conditions.

AX wheat and AX barley that had been reacted with BGE without prior oxidation and reduction, were subjected to the hot press technique described above. These samples were found to form a film.

AX wheat and AX barley that had been reacted with BGE following oxidation and reduction (i.e. Examples 2, 3, 5 and 6 of Table 4) were subjected to the hot press technique described above. These samples were found to form a film.

Xylan and GGM that had been reacted with BGE without prior oxidation and reaction (i.e. Examples 7 and 10 of Table 4) were subjected to the hot press technique described above. However, it was found that these samples melted only partially and did not form a homogenous film.

Xylan that had been oxidized, reduced and reacted with BGE (i.e. Example 6 of Table 4) was subjected to the hot press technique described above. However, it was found that this sample melted only partially and did not form a homogenous film.

### Carbohydrate analysis

Carbohydrate analysis was performed as described herein.

Table 5 shows the relative amounts of arabinose (Ara), galactose (Gal), glucose (Glc), xylose (Xyl) and mannose (Man) for the hemicelluloses AX wheat, AX barley, xylan and GGM. AX wheat and AX barley were obtained by the alkaline extraction process described herein.

**Table 5**

| Hemicellulose | Ara (Rel%) | Gal (Rel%) | Glc (Rel%) | Xyl (Rel%) | Man (Rel%) | Ara:Xyl | Gal:Glc:Man |
|---|---|---|---|---|---|---|---|
| AX wheat | 47 | 3 | 3 | 46 | 0 | 1:1 | ---- |
| AX barley | 21 | 1 | 8 | 71 | 0 | 0.3:1 | ---- |
| Xylan | 1 | 0 | 4 | 95 | 0 | --- | ---- |
| GGM | 2 | 12 | 19 | 0 | 67 | ---- | 0.18:0.29:1 |

From Table 5 it can be seen that the ratio Arabinose:Xylan was 1: 1 for AX wheat while it was 0.3:1 for AX barley. Thus, the arabinose content was considerably lower for AX barley. It can also be seen that the xylan and GGM contain very little arabinose.

Further, the total amount of arabinose (Ara), galactose (Gal), glucose (Glc), xylose (Xyl) and mannose (Man) for arabinoxylan (i) before and (ii) after oxidation, reduction and reaction with BGE was measured.

Figure 2 shows the amount of modified carbohydrates in per cent by weight (wt%) as measured by carbohydrate analysis as described herein for four samples derived from AX wheat obtained by alkaline extraction as described herein. A modified carbohydrate has a changed structure due to oxidation and reduction and/or BGE etherification. The AX wheat does not contain any modified carbohydrates added through either oxidation or etherification.

The AX sample that had been treated with 3 mole eq. of BGE was found to contain about 40 wt% of modified carbohydrates.

The sample 7% ox. AX + BGE refers to AX wheat that had been oxidized to a DO of 7%, reduced and reacted with 3 mole eq. of BGE as described herein. This sample was found to contain about 52 wt% of modified carbohydrates.

The sample 19% ox. AX + BGE refers to AX wheat that had been oxidized to a DO of 19%, reduced and reacted with 3 mole eq. of BGE as described herein. This sample was found to contain about 50 wt% of modified carbohydrates.

Figure 3 shows the amount of arabinose and xylose for arabinoxylan from wheat before and after treatment as described herein.

The AX wheat sample was found to contain 60 mg/L of xylose and arabinose, respectively giving an Ara:Xyl ratio of 1:1.

The AX sample that had been treated with 3 mole eq. of BGE was found to contain about 40 mg/L of xylose and about 30 mg/L of arabinose giving an Ara:Xyl ratio of 0.77:1.

The sample 7% ox. AX + BGE refers to AX wheat that had been oxidized to a DO of 7%, reduced and reacted with 3 mole eq. of BGE as described herein. This sample was found to contain about 30 mg/L of xylose and about 20 mg/L of arabinose giving an Ara:Xyl ratio of 0.77:1.

The sample 19% ox. AX + BGE refers to AX wheat that had been oxidized to a DO of 19%, reduced and reacted with 3 mole eq. of BGE as described herein. This sample was found to contain 30 mg/L of xylose and about 20 mg/L of arabinose giving an Ara:Xyl ratio of 0.77:1.

Figure 4 shows the amount of modified carbohydrates in per cent by weight (wt%) as measured by carbohydrate analysis as described herein for three samples of AX barley. The AX barley does not contain any modified carbohydrates.

Figure 5 shows the amount of arabinose and xylose for arabinoxylan from barley before and after treatment as described herein.

The sample 3% ox. AX + BGE refers to AX barley that had been oxidized to a DO of 3% reduced and reacted with 3 mole eq. of BGE as described herein. This sample was found to contain about 49 wt% of modified carbohydrates.

The sample 9% ox. AX + BGE refers to AX barley that had been oxidized to a DO of 9% reduced and reacted with 3 mole eq. of BGE as described herein. This sample was found to contain about 53 wt% of modified carbohydrates.

### Testing of films

Tensile stress, elongation and Young's modulus

Tensile test was performed on an Instron 5565A. Solution casted AX films with a gauge dimension of 20 × 5.6

× 0.1 mm or hot-melt pressed films with a gauge dimension of 20 × 5.6 × 0.4 mm was attached between two clamps where the lower clamp was still and the upper clamp moving apart until break of the films. A load cell of 100 N was used and the cross-head speed was 30 mm/min. Before testing the samples were conditioned at 23°C and 50% relative humidity. Six replicates were done for each sample. The tensile testing was done in atmosphere pressure and at ambient temperature. The samples were evaluated with the Bluehill 2 software.

**Table 6: Tensile stress, elongation and Young's modulus in the linear region measured for the different arabinoxylan samples from wheat bran.**

| Sample | Sample preparation | Tensile stress at maximum load (MPa) | Elongation at maximum load (%) | Young's modulus in the linear region (MPa) |
|---|---|---|---|---|
| AX (wheat) | Solution casting | 40.5 (± 10.3) | 7.6 (± 2.5) | 700 (± 155) |
| BGE-AX (2 mole eq.) | Solution casting | 20.9 (± 6.2) | 12.0 (± 4.2) | 372.6 (± 54.2) |
| BGE-AX (5 mole eq.) | Hot-melt press | 3.4 (± 0.5) | 25.3 (± 10.3) | 47.7 (± 13.8) |
| 7% ox. BGE-AX (5 mole eq.) | Hot-melt press | 0.6 (± 0.1) | 36.6 (± 11.4) | 4.0 (± 0.6) |
| 19% ox. BGE-AX (5 mole eq.) | Hot-melt press | 0.8 (± 0.1) | 184.6 (± 32.0) | 1.1 (± 0.1) |

It was concluded that the samples subjected to oxidation, reduction and reaction with BGE exhibited increased elasticity as evidenced by the values in Table 6 compared to samples that had not undergone oxidation and reduction.

<u>Melt viscosity</u>

Melt viscosity was measured on a DHR3 Rheometer (TA Instruments). The geometry used was a plate - plate with a diameter of 25 mm. The melt viscosity was measured at 140°C with a shear rate (y) varying from 0.1 to 500 $s^{-1}$. The temperature was controlled under air by an Environmental test chamber kit-DHR provided by TA Instrument. The melt viscosity could only be measured for the BGE treated arabinoxylans since non-modified arabinoxylan do not melt at those temperatures. Only arabinoxylans from wheat bran were analysed.

**Table 7: The melt viscosity for the different BGE-treated arabinoxylan (wheat bran) samples at a shear rate of 10 $s^{-1}$ and a temperature of 140°C.**

| Sample | Sample preparation | Viscosity at $\gamma$=10 $s^{-1}$ (Pa s) |
|---|---|---|
| 7% ox. BGE-AX | Solution casting | 118.7 (± 4.6) |
| 19% ox. BGE-AX | Solution casting | 128.8 (± 20.6) |

## Claims

**1.** A process for producing modified hemicellulose, said process comprising the steps of:

a) providing a mixture of at least one solvent and a hemicellulose, wherein said hemicellulose is arabinoxylan,
b) subjecting the mixture of step a) to an oxidizing agent selected from the group consisting of periodate, lead tetraacetate, ozone, dichromate, permanganate, thallium(III) salts, pyridinium chlorochromate and any combination thereof to provide an oxidized mixture,
c) adding a reducing agent selected from the group consisting of aluminium hydride, borohydride, dithionite, polysulfide, anthraquinone and any combination thereof to said oxidized mixture, and
d) treating the mixture of step c) with a reagent selected from the group consisting of: epoxide, alkyl halide, alkyl tosylate, alkyl mesylate and any combination thereof, optionally in the presence of a base or a coupling reagent, thereby providing modified hemicellulose.

**2.** A method according to claim 1, wherein said arabinoxylan has an arabinose:

xylose ratio within the range of from 2:1 to 0.1:1 such as from 2:1 to 1:5.

3. A process according to any one of the preceding claims, wherein said arabinoxylan is provided from at least one cereal and/or wood.

4. A process according to claim 3, wherein said at least one cereal is cereal bran such as wheat bran, barley bran, rye bran, or oat bran, or
cereal husk such as wheat husk, barley husk, rye husk, or oat husk.

5. A process according to claim 4, wherein the cereal comprises wheat bran and/or barley husk.

6. A process according to any one of the preceding claims, wherein said hemicellulose in step a) is obtained from agricultural side streams and/or product streams.

7. A process according to any one of the preceding claims, wherein said hemicellulose in step a) is obtained from an alkaline extraction process, or a process comprising pressurized hot water extraction and enzymatic treatment.

8. A process according to any one of the preceding claims, further comprising a step of:
e) forming a film comprising said modified hemicellulose.

9. A process according to claim 8, wherein the step of forming a film comprises subjecting said modified hemicellulose to solution casting, hot pressing, film blowing and/or extrusion blowing.

10. Modified hemicellulose obtainable by any one of the preceding claims.

11. An article comprising modified hemicellulose according to claim 10.

12. An article according to claim 11, which is selected from the group consisting of a film, material, membrane, food ingredient, and additive.

13. An article according to 11 or 12, which is a film.

14. An article according to any one of claims 11-13, **characterized by** exhibiting at least one of the following properties:

water-insoluble,
an elongation within the range of from about 12% to about 300%
a melt viscosity within the range of from about 50 Pa·s to about 70.000 Pa·s, wherein the elongation and the melt viscosity are measured as disclosed in the description.

**Patentansprüche**

1. Verfahren zum Herstellen von modifizierter Hemicellulose, das Verfahren umfassend die folgenden Schritte:

a) Bereitstellen einer Mischung aus mindestens einem Lösungsmittel und einer Hemicellulose, wobei die Hemicellulose Arabinoxylan ist,
b) Aussetzen der Mischung aus Schritt a) einem Oxidationsmittel, ausgewählt aus der Gruppe, bestehend aus Periodat, Bleitetraacetat, Ozon, Dichromat, Permanganat, Thallium(III)-Salzen, Pyridiniumchlorchromat und jeder beliebigen Kombination davon, um eine oxidierte Mischung bereitzustellen,
c) Hinzufügen eines Reduktionsmittels, ausgewählt aus der Gruppe, bestehend aus Aluminiumhydrid, Borhydrid, Dithionit, Polysulfid, Anthrachinon und jeder beliebigen Kombination davon, zu der oxidierten Mischung, und
d) Behandeln der Mischung aus Schritt c) mit einem Reagens, ausgewählt aus der Gruppe, bestehend aus: Epoxid, Alkylhalogenid, Alkyltosylat, Alkylmesylat und jeder beliebigen Kombination davon, optional in der Gegenwart einer Base oder eines Kupplungsreagens, wobei dadurch eine modifizierte Hemicellulose bereitgestellt wird.

2. Verfahren nach Anspruch 1, wobei das Arabinoxylan ein Arabinose : Xylose-Verhältnis innerhalb des Bereichs von 2 : 1 bis 0,1 : 1, wie etwa 2 : 1 bis 1 : 5, aufweist.

3. Verfahren nach einem der vorstehenden Ansprüche, wobei das Arabinoxylan aus mindestens einem Getreide und/oder Holz bereitgestellt wird.

4. Verfahren nach Anspruch 3, wobei das mindestens eine Getreide Getreidekleie, wie etwa Weizenkleie, Gerstenkleie, Roggenkleie oder Haferkleie, oder
Getreideschalen wie etwa Weizenschalen, Gerstenschalen, Roggenschalen oder Haferschalen ist.

5. Verfahren nach Anspruch 4, wobei das Getreide Weizenkleie und/oder Gerstenschalen umfasst.

6. Verfahren nach einem der vorstehenden Ansprüche, wobei die Hemicellulose in Schritt a) aus landwirtschaftlichen Nebenströmen und/oder Produktströmen erhalten wird.

7. Verfahren nach einem der vorstehenden Ansprüche, wobei die

Hemicellulose in Schritt a) aus einem alkalischen Extraktionsverfahren erhalten wird, oder
ein Verfahren, umfassend unter Druck stehende Heißwasserextraktion und enzymatische Behandlung.

8. Verfahren nach einem der vorstehenden Ansprüche, das ferner umfassend einen folgenden Schritt:
e) Ausbilden einer Folie, umfassend die modifizierte Hemicellulose.

9. Verfahren nach Anspruch 8, wobei der Schritt des Ausbildens einer Folie umfasst:
Aussetzen der modifizierten Hemicellulose einem Lösungsgießen, Heißpressen, Folienblasen und/oder Extrusionsblasen.

10. Modifizierte Hemicellulose, erhältlich durch einen der vorstehenden Ansprüche.

11. Erzeugnis, umfassend modifizierte Hemicellulose nach Anspruch 10.

12. Erzeugnis nach Anspruch 11, das aus der Gruppe ausgewählt ist, bestehend aus einer Folie, einem Material, einer Membran, einem Lebensmittelbestandteil und einem Zusatzstoff.

13. Erzeugnis gemäß 11 oder 12, das eine Folie ist.

14. Erzeugnis nach einem der Ansprüche 11 bis 13, **dadurch gekennzeichnet, dass** es mindestens eine der folgenden Eigenschaften vorweist:

wasserunlöslich,
eine Dehnung innerhalb des Bereichs von etwa 12 % bis etwa 300 %
eine Schmelzviskosität innerhalb des Bereichs von etwa 50 Pa s bis etwa 70.000 Pa s, wobei die Dehnung und die Schmelzviskosität wie in der Beschreibung offenbart, gemessen werden.

## Revendications

1. Procédé de production d'hémicellulose modifiée, ledit procédé comprenant les étapes consistant à :

a) fournir un mélange d'au moins un solvant et d'une hémicellulose, dans lequel ladite hémicellulose est l'arabinoxylane,
b) soumettre le mélange de l'étape a) à un agent oxydant choisi dans le groupe consistant en periodate, tétraacétate de plomb, ozone, dichromate, permanganate, sels de thallium(III), chlorochromate de pyridinium et toute combinaison de ceux-ci pour fournir un mélange oxydé,
c) ajouter un agent réducteur choisi dans le groupe constitué par l'hydrure d'aluminium, le borohydrure, le dithionite, le polysulfure, l'anthraquinone et toute combinaison de ceux-ci audit mélange oxydé, et
d) traiter le mélange de l'étape c) avec un réactif choisi dans le groupe consistant en : époxyde, halogénure d'alkyle, tosylate d'alkyle, mésylate d'alkyle et toute combinaison de ceux-ci, éventuellement en présence d'une base ou d'un réactif de couplage, fournissant ainsi une hémicellulose modifiée.

2. Procédé selon la revendication 1, dans lequel ledit arabinoxylane a un rapport arabinose:xylose dans la plage de

2:1 à 0,1:1, tel que de 2:1 à 1:5.

**3.** Procédé selon l'une quelconque des revendications précédentes, dans lequel ledit arabinoxylane est fourni à partir d'au moins une céréale et/ou de bois.

**4.** Procédé selon la revendication 3, dans lequel ladite au moins une céréale est du son de céréale tel que du son de blé, du son d'orge, du son de seigle ou du son d'avoine, ou
une balle de céréale telle que la balle de blé, la balle d'orge, la balle de seigle ou l'écale d'avoine.

**5.** Procédé selon la revendication 4, dans lequel la céréale comprend du son de blé et/ou de la balle d'orge.

**6.** Procédé selon l'une quelconque des revendications précédentes, dans lequel ladite hémicellulose à l'étape a) est obtenue à partir de flux secondaires agricoles et/ou de flux de produits.

**7.** Procédé selon l'une quelconque des revendications précédentes, dans lequel ledit

l'hémicellulose à l'étape a) est obtenue à partir d'un procédé d'extraction alcaline, ou
un procédé comprenant une extraction à l'eau chaude sous pression et un traitement enzymatique.

**8.** Procédé selon l'une quelconque des revendications précédentes, comprenant en outre une étape consistant à :
e) former un film comprenant ladite hémicellulose modifiée.

**9.** Procédé selon la revendication 8, dans lequel l'étape de formation d'un film comprend
soumettre ladite hémicellulose modifiée à un coulage en solution, un pressage à chaud, un soufflage de film et/ou un soufflage par extrusion.

**10.** Hémicellulose modifiée pouvant être obtenue selon l'une quelconque des revendications précédentes.

**11.** Article comprenant de l'hémicellulose modifiée selon la revendication 10.

**12.** Article selon la revendication 11, qui est choisi dans le groupe constitué d'un film, d'un matériau, d'une membrane, d'un ingrédient alimentaire et d'un additif.

**13.** Article selon la revendication 11 ou 12, qui est un film.

**14.** Article selon l'une quelconque des revendications 11 à 13, **caractérisé en ce qu'**il présente au moins l'une des propriétés suivantes :

insoluble dans l'eau,
un allongement dans la plage d'environ 12 % à environ 300 %
une viscosité à l'état fondu dans la plage d'environ 50 Pa.s à environ 70 000 Pa.s, dans lequel l'allongement et la viscosité à l'état fondu sont mesurés comme décrit dans la description.

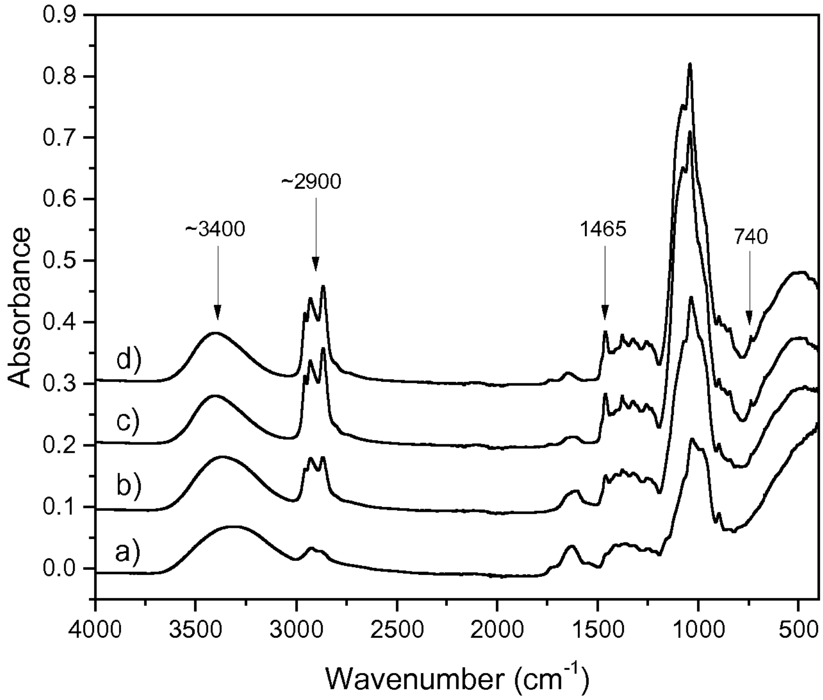

Absorbance
Wavenumber (cm-1)
~3400
~2900
1465
740
a)
b)
c)
d)
0.0
0.1
0.2
0.3
0.4
0.5
0.6
0.7
0.8
0.9
4000
3500
3000
2500
2000
1500
1000
500


*Figure 1*

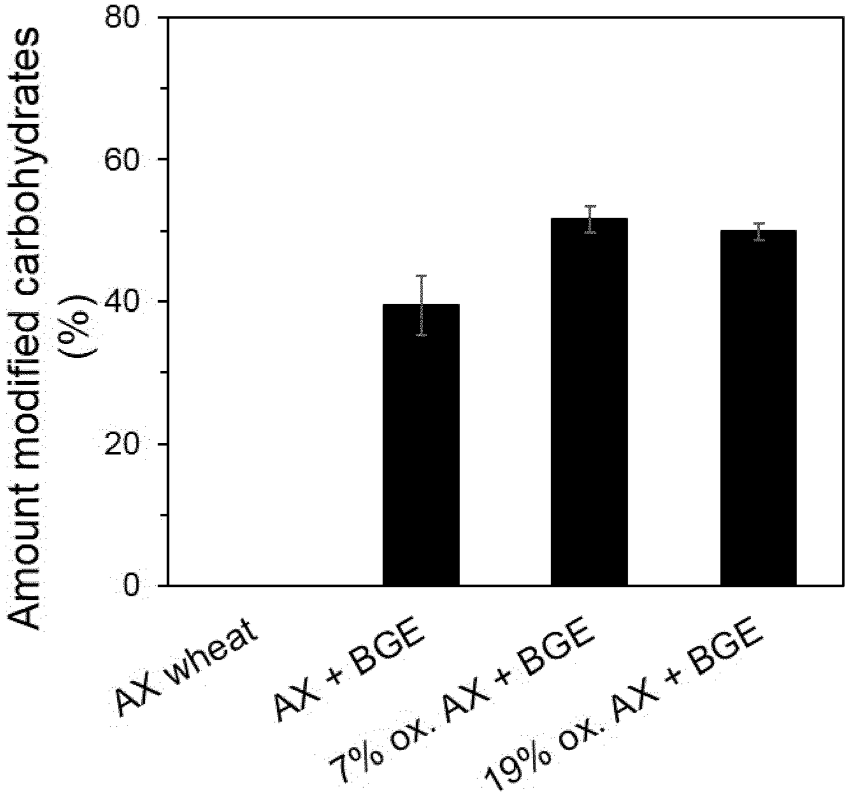


*Figure 2*

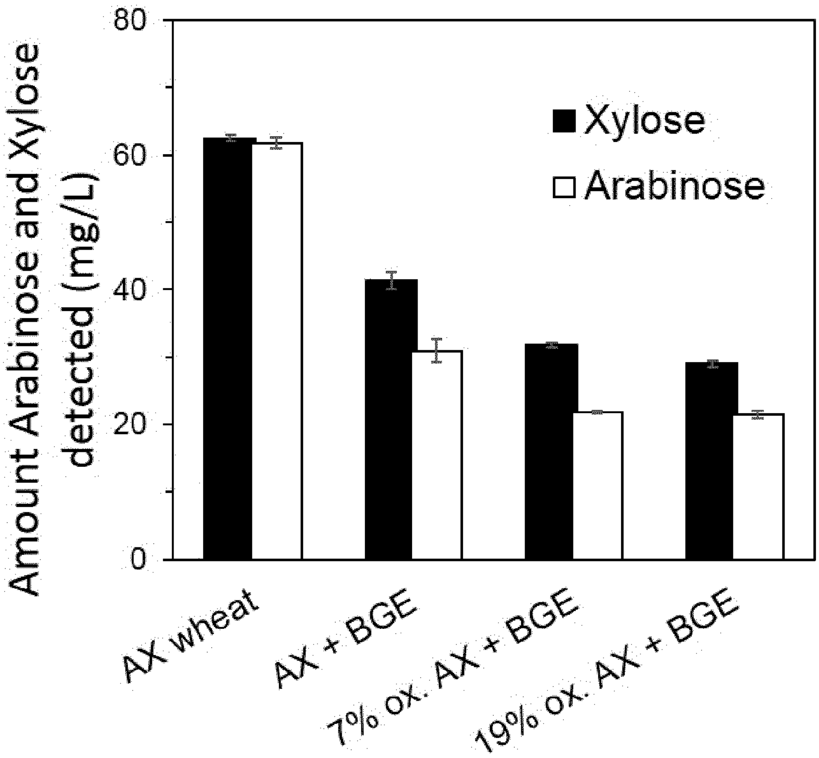


*Figure 3*

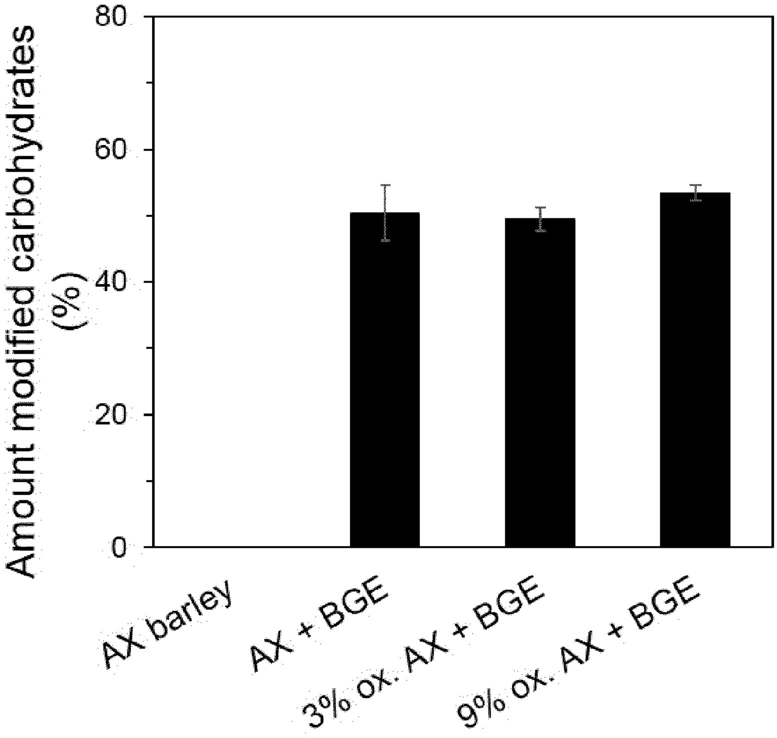


*Figure 4*

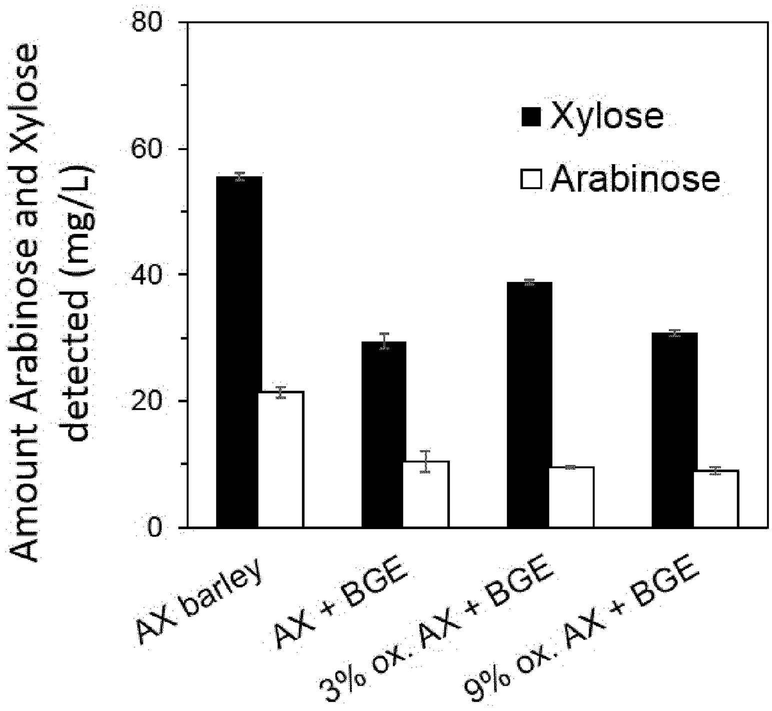


*Figure 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016198651 A


### Non-patent literature cited in the description


- *Biomacromolecules,* 2016, vol. 17, 2972-2980
- Wood research: bulletin of the Wood research Institute. Kyoto University, 1986, vol. 73, 44-49
- **MIKAELA BÖRJESSON.** Chemical modification of polysaccharides - Fundamental research with an applied perspective. Chalmers University of Technology, 2016
- *BioResources,* 2018, vol. 13 (3), 6201-6220
- **MAEKAWA et al.** Wood research: bulletin of the Wood research Institute. Kyoto University, 1986, vol. 73, 44-49